# EUROPEAN PATENT SPECIFICATION

(11) **EP 0 322 948 B1**
(45) Date of publication and mention of the grant of the patent: **24.03.1993**
(21) Application number: 88202828.5
(22) Date of filing: 09.12.1988
(51) Int. Cl.: B60N 2/00, B60N 2/42

(54) **Padded seat comprising a safety device for the occupier of a car**
Polstersitz mit einer Sicherheitsvorrichtung für den Insassen eines Kraftwagens
Siège rembourre avec dispositif de sécurité pour le passager d'une voiture

(30) Priority: 24.12.1987 IT 2294987 U
(43) Date of publication of application: 05.07.1989
(73) Proprietor: FIAT AUTO S.p.A., 10135 Torino (IT)
(72) Inventor: Ghezzi, Lucio, I-20052 Monza Milan (IT)
(74) Representative: De Carli, Erberto

(56) References cited:
- CH-A- 344 629
- DE-A- 2 916 579
- GB-A- 1 094 363
- US-A- 3 832 003

## Description

The present invention relates to a padded car seat comprising a safety device suitable for retaining the lower portion of the body of the occupier of the seat.

Fastener devices for car occupiers are generally of two types, i.e., an active type and a passive type.

The first kind of fastener devices become operative in case of sudden decelerations of the car, as in case of impacts, in order to fasten the occupiers and prevent them from being projected forwards. Devices of this kind are inflatable air cushions and safety belts equipped with inertial winding means.

The fastener devices of passive type are normally provided in suitable positions in order to retain portions of the body of a car occupier, like headrests and dashboard paddings, acting as knee protector means.

Most fastener devices act on the upper portion of the car occupier's body, in order to prevent the head of the occupiers of the car from bumping against portions of the car, such as the windshield; but also devices were developed in the past for protecting the lower portions of the occupier's body, like the knee protectors, which are useful in order to prevent serious injuries in case of accidents in which the abdomen and the lower limbs of the occupiers of the car are projected forwards, slipping on the surfaces of the occupied seats.

These latter devices are used above all in order to minimize the consequences of the forwards slipping of the occupier's abdomen and of the lower limbs, and to limit the injuries to them; but their effectiveness can be considerably increased if devices are provided for, which are capable of reliably fastening the abdomen and the lower limbs of the occupiers of the seats.

GB-A-1 094 363 discloses a padded car seat according to the preamble of claim 1. In this known seat the support structure comprises a plurality of straps sustaining the padded seat by interposition of a panel. In use, this construction has the effect of exerting a sideways pressure on the cushion under certain circumstances, tending to wrap around the lower portion of the body of the occupier. However, for preventing the occupier from slipping forwards on the seat, an abdominal belt is needed.

The abdominal safety belts known from the prior art, as well as the inflatable air cushions, are not always suitable for their intended purpose, and in some cases they do not succeed in preventing the abdomen and the lower limbs of a car occupier from slipping on the seat.

A purpose of the present invention is to provide a padded car seat with a safety device, specific for the abdomen and lower limbs of an occupier of the car, capable of preventing the occupier from slipping on his seat, and consequently slipping forwards, in case of a sudden deceleration of the car.

Another purpose of the present invention is to provide such a padded car seat with a safety device which does not limit the freedom of movement of the occupiers' legs, during the normal running of the car, and, above all, which does not hinder the movements which the driver must perform in order to operate the car pedals.

These purposes are achieved by a padded car seat having the features claimed in claim 1. Preferred embodiments are defined in dependent claims 2 to 4.

A car seat with a safety device according to the present invention succeeds in efficaciously retaining the abdomen, as well as the lower limbs of an occupier of the seat in case of a sudden deceleration of the vehicle, in that, by frontally retaining the padding of the padded seat, it prevents the front portion of the padding from being squeezed by the occupier under the effect of a sudden deceleration, and therefore prevents the occupier from slipping forwards on the padded seat.

The embodiment with the arc-shaped upper edge of the central band is particularly suitable for the driver's seat, because at the lowered portions the band allows the lower limbs, and in particular the left-hand lower limb, of the driver, to freely sink, when they must be stretched out, in particular in order to operate the pedal of the clutch, during the normal car running.

The safety device is endowed with the advantage that it can be fastened to the padded seat support structure during the manufacturing step, for example, by welding, or in a subsequent step, for example by riveting.

Therefore, it can be mounted as a safety fitting also on completely finished seats.

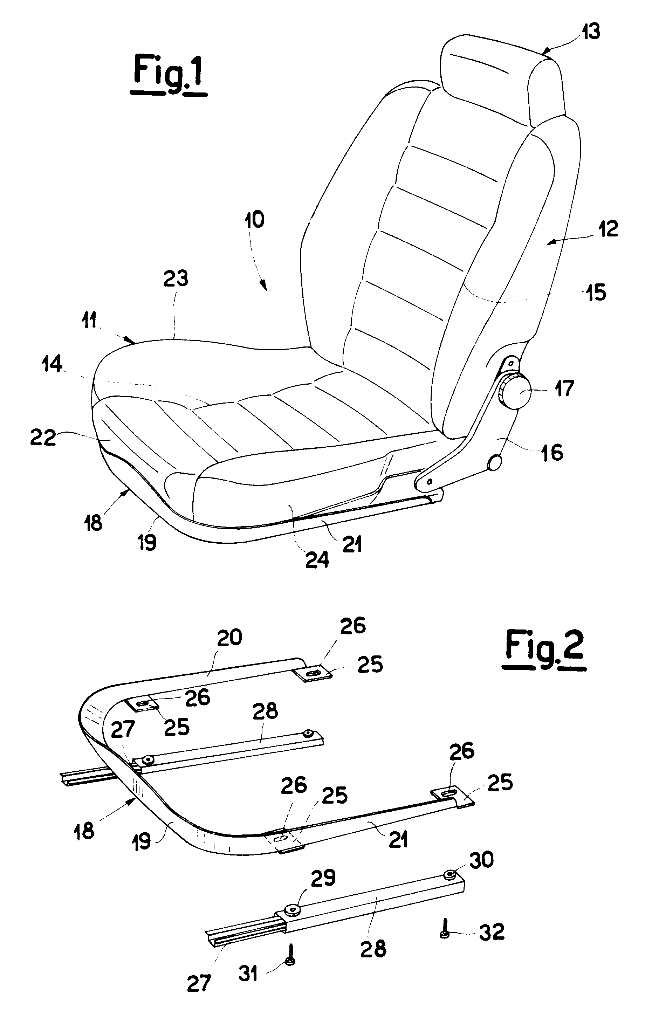

Characteristics and advantages of the present invention will be now illustrated by referring to the hereto attached Figures 1 and 2, wherein for exemplifying, non-limitative purposes, a preferred form of practical embodiment of the same invention is shown.
Figure 1 shows a seat comprising a safety device according to the present invention;
Figure 2 shows the safety device separated from the seat of Figure 1.

In Figure 1, by the reference numeral 10 a front seat of a car is generally indicated, which is formed by a padded seat 11, a seat back 12 and a headrest 13.

The padded seat 11 and the seat back 12 are constituted, as usual, by a support structure and a padding, not shown in the figures, and are finished by means of covers 14 and 15.

Brackets 16 link the padded seat 11 and the seat back 12 to each other; a knob 17 allows the back inclination adjustment.

The safety device, i.e., the device for retaining the abdomen and the lower limbs of the occupier of the seat 10, comprises a rigid belt 18, e.g., of metal sheet, having a generally "C"-shape, as it clearly results from Figure 2.

The belt 18 includes at least a central band 19 and, preferably, two side bands 20 and 21, which surround the padding of the padded seat 11 respectively at its front portion 22 and at its side walls 23 and 24. Specifically, the central band 19 frontally retains the padding of the padded seat 11, wherein the upper profile of the central band 19 lies below the upper edge of the padded seat 11 and includes a central portion raised with respect to the lower edge of the padded seat 11.

The side bands 20 and 21 are provided with connection means in form of brackets 25 with slots 26, by which the belt 18 can be fastened to the padded seat support structure and to a pair of saddles 27 and 28, which, in their turn, are fastened to the floor of the bodywork of the car, not shown in the Figures.

Two rubber spacers 29 and 30 are interposed between the upper saddles 28 and the brackets 25, and bolts 31 and 32 make the same brackets 25 rigid with the upper saddles 28.

The central band 19 of the belt 18 has a substantially arc-shaped upper edge, in order to allow an efficacious action of retention of the abdomen and the lower limbs of the occupier of the seat 10 to be performed in case of a sudden deceleration of the car, because it prevents them from slipping forwards on the padded seat 11, in that it frontally stiffens the padded seat 11, preventing it from being squeezed.

Therefore, a safety belt with the only dorsal branch can be used.

The lowered end portions of the central band 19, which are smoothly radiused with the side bands 20 and 21 positioned adjacent to the lower edges of the side walls 23 and 24, enable the lower limbs, and in particular the left-hand lower limb, of the occupier of the car to freely lower when they must be stretched out, in particular in order to operate the pedal of the clutch during the normal running of the car.

In the example shown, the belt 18 is placed outside the cover 14 of the padded seat 11, but it could also be hidden inside the same cover. The belt 18 could comprise only the central band 19, provided with suitable connection means for being fastened to the padded seat support structure.

## Claims

1. A padded car seat (11) comprising a safety device suitable for retaining the lower portion of the body of the occupier of the seat, said padded seat (11) being provided with a support structure for the padding and with a finishing cover (14), said support structure being linked to the bodywork of the car by means of saddles (27,28), characterized in that said safety device comprises a rigid belt (18) equipped with connection means (25,26) which can be fastened to said padded seat support structure, said rigid belt (18) including at least a central band (19) frontally retaining the padding of the padded seat (11), wherein the upper profile of said central band (19) lies below the upper edge of the padded seat (11) and includes a central portion raised with respect to the lower edge of the padded seat (11).

2. A padded car seat according to claim 1, characterized in that said rigid belt (18) has a generally "C"-shape with two side bands (20,21) smoothly radiused with said central band (19) and positioned at the sides of the padded seat (11).

3. A padded car seat according to claim 1 or 2, characterized in that said central band (19) has a substantially arc-shaped upper edge defining two lowered portions at the side ends of the front portion (22) of the padded seat (11).

4. A padded car seat according to claim 2, characterized in that said side bands (20,21) are positioned adjacent to the lower edges of the side walls (23,24) of the padded seat (11) and are provided with said connection means (25,26).

## Patentansprüche

1. Gepolsterter Autositz (11) mit einer Sicherheitseinrichtung, welche geeignet ist, den unteren Teil des Körpers,der sich auf dem Sitz befindlichen Person zurückzuhalten, wobei der gepolsterte Sitz (11) versehen ist mit einer Halterungsstruktur für die Polsterung und mit einer Endabdeckung (14), wobei die Halterungsstruktur mit der Fahrzeugkarosserie mit Hilfe von Supporten (27, 28) verbunden ist ,
dadurch **gekennzeichnet,** daß
die Sicherheitseinrichtung einen festen Gurt (18) umfaßt, welcher versehen ist mit einer Verbindungseinrichtung (25, 26), welche an der Halterungsstruktur des gepolsterten Sitzes befestigt werden kann, wobei der feste Gurt (18) zumindest ein zentrales Band (19) umfaßt, welches auf der Vorderseite die Polsterung des gepolsterten Sitzes (11) zurückhält, wobei das Oberprofil des zentralen Bandes (19) unter dem oberen Rand des gepolsterten Sitzes (11) liegt und einen zentralen Abschnitt beinhaltet, welcher erhöht ist bezüglich des unteren Randes des gepolsterten Sitzes (11).

2. Gepolsterter Autositz nach Anspruch 1,
dadurch **gekennzeichnet,** daß
der feste Gurt (18) im wesentlichen "C"-förmig ist, wobei zwei Seitenbänder (20, 21) vorhanden sind, die leicht gekrümmt sind zu dem zentralen Band (19) und an den Seiten des gepolsterten Sitzes (11) positioniert sind.

3. Gepolsterter Autositz nach Anspruch 1 oder 2,
dadurch **gekennzeichnet,** daß
das zentrale Band (19) ein im wesentlichen bogenförmigen oberen Rand hat, der zwei erniedrigte Abschnitte an den Seitenenden des Vorderabschnitts (22) des gepolsterten Sitzes (11) definiert.

4. Gepolsterter Autositz nach Anspruch 2,
dadurch **gekennzeichnet,** daß
die Seitenbänder (20, 21) neben den unteren Rändern der Seitenwände (23, 24) des gepolsterten Sitzes (11) angeordnet sind und mit der Verbindungseinrichtung (25, 26) versehen sind.

## Revendications

1. Siège rembourré (11) pour véhicules, comprenant un dispositif de sécurité approprié pour retenir la partie inférieure du corps de l'occupant du siège, ledit siège rembourré (11) étant muni d'une structure de support pour le rembourrage et d'un revêtement de finition (14), ladite structure de support étant assemblée à la caisse du véhicule au moyen de supports (27, 28), caractérisé en ce que ledit dispositif de sécurité comprend une sangle rigide (18) équipée de moyens d'assemblage (25, 26) qui peuvent être fixés à ladite structure de support du siège rembourré, ladite sangle rigide (18) comprenant au moins une bande centrale (19) qui retient en position frontale le rembourrage du siège rembourré (11), le profil supérieur de ladite bande centrale (19) se trouvant au-dessous du bord supérieur du siège rembourré (11) et comprenant une partie centrale surélevée par rapport au bord inférieur du siège rembourré (11).

2. Siège rembourré pour véhicule selon la revendication 1, caractérisé en ce que ladite sangle rigide (18) présente de façon générale la forme d'un "C", et comporte deux bandes latérales (20, 21) qui se raccordent à ladite bande centrale (19) par des arrondis de grand rayon, et sont positionés sur les côtés du siège rembourré (11).

3. Siège rembourré pour véhicule selon la revendication 1 ou 2, caractérisé en ce que ladite bande centrale (19) présente un bord supérieur sensiblement en forme d'arc qui définit deux parties abaissées aux extrémités latérales de la partie avant (22) du siège rembourré (11).

4. Siège rembourré pour véhicule selon la revendication 1, caractérisé en ce que lesdites bandes latérales (20, 21) sont placées adjacentes aux bords inférieurs des parois latérales (23, 24) du siège rembourré (11) et sont munies desdits moyens d'assemblage (25, 26).
